# EUROPEAN PATENT APPLICATION

(11) **EP 4 600 012 A1**
(43) Date of publication of application: **13.08.2025**
(21) Application number: 24157089.4
(22) Date of filing: 12.02.2024
(51) Int. Cl.: B29C 45/00, B29C 45/16, B29L 31/30

(54) **TWO-MATERIAL INJECTION MOLDING METHOD**

(71) Applicant: ZKW Group GmbH, 3250 Wieselburg (AT)
(72) Inventor: Sinkora, Martin, 95135 Vel'ké Zálu ie (SK); Potocný, Tomás, 94911 Nitra (SK)
(74) Representative: Patentanwaltskanzlei Matschnig & Forsthuber OG

(57) **Abstract**

A two-material injection molding method for forming a construction element (10) for a vehicle headlamp, wherein the method comprises the following steps in chronological order:
a) providing a first injection unit configured to inject a first material, and a second injection unit configured to inject a second material, further a first tool part (310) and a second tool part (320) for building at least two components (100), and a third tool part (330) for building the holder (200);
b) building the first injection molding tool (300a) by bringing together the first and second tool parts (310, 320), wherein the second tool part (320) comprises first runners (321);
c) forming the at least two components (100);
d) separating the first and second tool parts (310, 320) from each other, wherein the at least two components (100) remain in the first tool part (310), wherein each component (100) comprises at least one injection mark (110);
e) building the second injection molding tool (300b) by bringing together the first and third tool parts (310, 330), wherein the third tool part (330) comprises at least one second runner (331);
f) forming the holder (200), so that the injection marks (110) of the components (100) are over-molded with the second material;
g) separating the first and third tool parts (310, 330) from each other and ejecting the built construction element (10).

## Description

The invention relates to a two-material injection molding method for forming a construction element for a vehicle headlamp, wherein the construction element comprises:
- at least two components, which are separated from each other in a predetermined distance, wherein the at least two components are formed with a first material,
- a holder, which holds the at least two components in the predetermined distance, wherein the holder is formed with a second material.

In a 2K injection molding process, the tool parts - for example two tool parts - forming the injection molding tool are separated from each other after components have been produced in a mold.

Typically, a separation from a first and second tool part leads to injection marks or residues on the components. This is due to the fact that in the runners, which are configured to inject the material into the injection molding tool, material will remain after injection and will be connected to the component.

These injection marks are undesirable because they interfere with the homogeneous surfaces of the components. These markings are usually removed in a separate step to create a homogeneous surface. However, these measures require a complicated intermediate step that is costly and time-consuming.

It is an object of the invention to provide an enhanced two-material injection molding method for forming a construction element for a vehicle headlamp.

To achieve this object the method comprises the following steps in chronological order:
a) providing
   - a first injection unit configured to inject a first material into an injection molding tool,
   - a second injection unit configured to inject a second material into an injection molding tool,
   - a first tool part and a second tool part, which when brought together build a first injection molding tool for building the at least two components, and
   - a third tool part, which when brought together with the first tool part build a second injection molding tool for building the holder;
b) building the first injection molding tool by bringing together the first and second tool parts in order to form at least two first tool cavities separate from each other for forming the at least two components, wherein the second tool part comprises first runners for injecting the first material via the first injection unit, wherein to each first tool cavity at least one first runner is assigned to;
c) forming the at least two components by injecting the first material with the first injection unit into the first tool cavities via the first runner;
d) separating the first and second tool parts from each other, wherein the at least two components remain in the first tool part, wherein each component comprises at least one injection mark formed from the first material caused by separation of the first runners from the components,
e) building the second injection molding tool by bringing together the first and third tool parts in order to form a second tool cavity for forming the holder, wherein the third tool part comprises at least one second runner for injecting the second material via the second injection unit, and wherein the second tool cavity is formed in such a way that the injection marks of the components in step d) are part of limiting the second tool cavity;
f) forming the holder by injecting the second material with the second injection unit into the second tool cavity via the at least one second runners, so that the injection marks of the components are over-molded with the second material;
g) separating the first and third tool parts from each other and ejecting the built construction element.

The term "injection mark" comprises all sorts of residues after separation of the first and second tool parts. An "injection mark" can therefore be a protrusion or a visible deformity in comparison to the remaining homogenous part of the components made of the first material.

Advantageously, the at least two components are built as letters.

Advantageously, the first runners could be hot runners or cold runners.

Advantageously, the second runners could be hot runners or cold runners.

By using cold runners for first runners, there is no limitation for the weight of the components. Thus, for each component up to 10 g of material can be used, preferably the weight for one component ranges from 0.7 g to 2.2 g.

By using cold runners for first runners, the weight difference between components can be more than 20%.

Advantageously, the first material is an opaque material.

Advantageously, the second material is a transparent material.

Advantageously, the second tool part is arranged on a first side of the first tool part and the third tool part is arranged on a side opposite of the first side of the first tool part, wherein in step e) the first tool part is rotated around a first rotation axis so that the built components, which remain in the first tool part, facing the third tool part for building the second tool cavity.

Advantageously, the second tool part and the third tool part are arranged on the same side opposite to the first tool part, wherein in step e) the first tool part is rotated around a second rotation axis so that the built components, which remain in the first tool part, facing the third tool part for building the second tool cavity.

Advantageously, the first and second material is plastic.

This object is also achieved by a construction element for a vehicle headlamp, wherein the construction element is made according to any one of the preceding method claims, wherein the construction element comprises:
- at least two components, which are separated from each other in a predetermined distance, wherein the at least two components are formed with a first material,
- a holder, which holds the at least two components in the predetermined distance, wherein the holder is formed with a second material,
and wherein injection marks formed from the first material caused by separation of the first runners from the components, are over-molded by the second material and for an external spectator not visible on the construction element.

Advantageously, the first material is an opaque material.

Advantageously, the second material is a transparent material.

### Description of the Drawings

In the following, in order to further demonstrate the present invention, illustrative and non-restrictive embodiments are discussed, as shown in the drawings, which show:
- Fig. 1A to 1F: a first example of a method for forming a construction element according to the invention,
- Fig. 2A to 2F: a second example of a method for forming a construction element according to the invention,
- Fig. 3A to 3D: a third example of a method for forming a construction element according to the invention,
- Fig. 4A to 4D: a fourth example of a method for forming a construction element according to the invention.

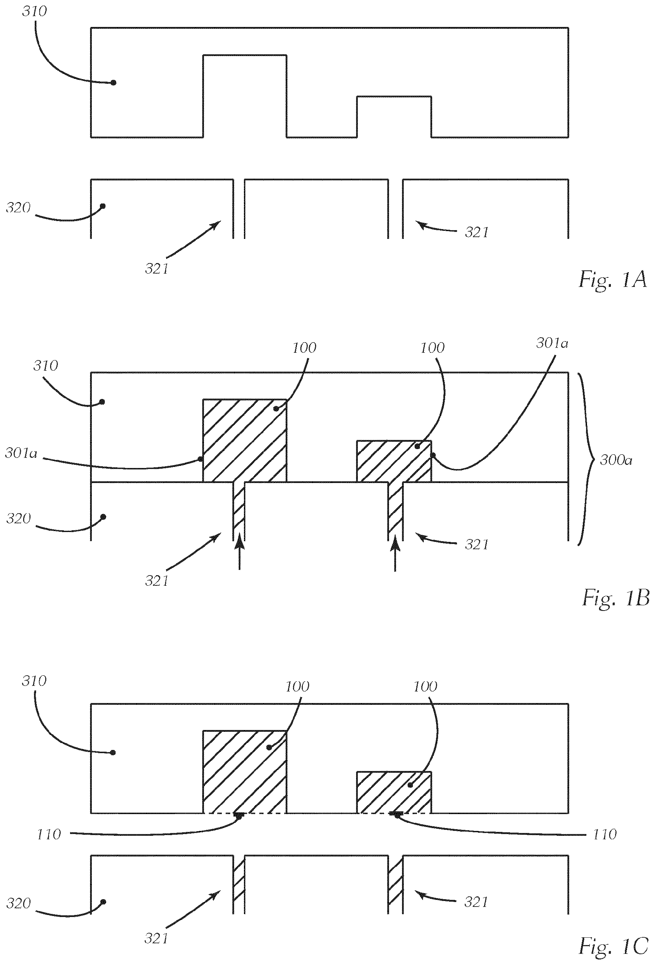

**Fig. 1A** to **Fig. 1F** show a first example of a two-material injection molding method for forming a construction element **10** for a vehicle headlamp, wherein the construction element **10** comprises two components **100,** which are separated from each other in a predetermined distance, wherein the two components **100** are formed with a first material. Further, the construction element **10** comprises a holder **200,** which holds the two components **100** in the predetermined distance, wherein the holder **200** is formed with a second material.

In the shown examples, the first material is an opaque material, wherein the second material is a transparent material. The first and second material is also made of plastic.

The method comprises the steps in chronological order, wherein in a first step a) a first injection unit configured to inject a first material into an injection molding tool, and a second injection unit configured to inject a second material into an injection molding tool, is provided.

Further, it is provided a first tool part **310** and a second tool part **320,** which when brought together build an injection molding tool **300a** for building the at least two components **100,** which can be seen in **Fig. 1A****.**

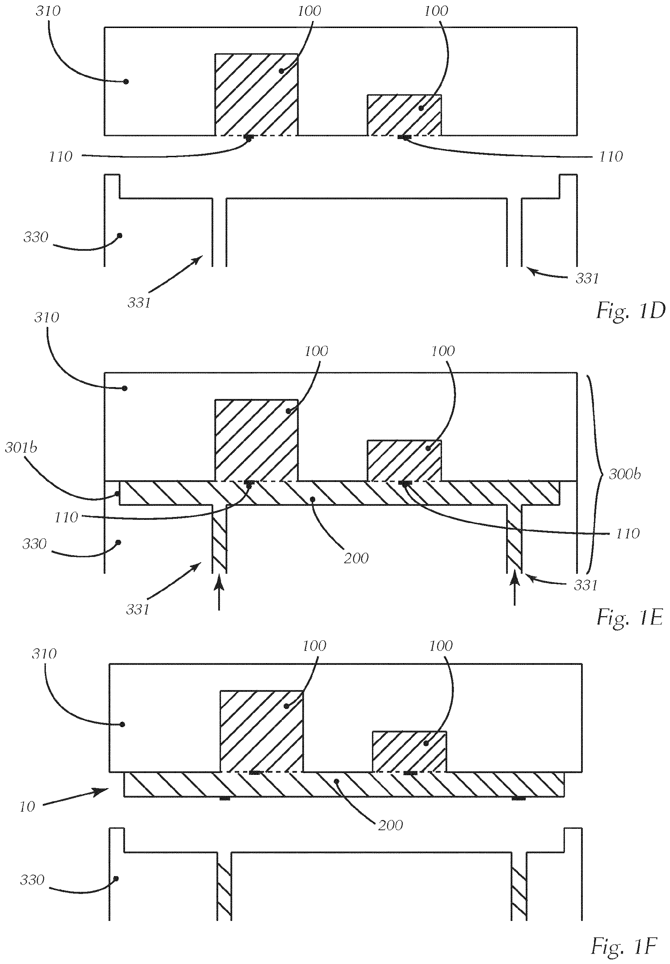

Further, it is provided a third tool part **330,** which when brought together with the first tool part **310** build a further injection molding tool **300b** for building the holder **200,** which third tool part **330** can be seen in **Fig. 1D****.**

A next step b) provides for building the first injection molding tool **300a** by bringing together the first and second tool parts **310, 320** in order to form at least two first tool cavities **301a** separate from each other for forming the two components **100,** as can be seen in **Fig. 1B****.**

The second tool part **320** comprises first runners **321** for injecting the first material via the first injection unit, wherein to each first tool cavity **301a** at least one first runner **321** is assigned to - in the shown example, one first runner is assigned to each first tool cavity **301a.**

A next step c) provides for forming the two components **100** by injecting the first material with the first injection unit into the first tool cavities **301a** via the first runners **321,** as can also be seen in **Fig. 1B****.**

A next step d) provides for separating the first and second tool parts **310, 320** from each other, wherein the two components **100** remain in the first tool part **310,** wherein each component **100** comprises one injection mark **110** formed from the first material caused by separation of the first runners **321** from the components **100,** as can be seen in **Fig. 1C****.**

A next step e) provides for building the second injection molding tool **300b** by bringing together the first and third tool parts **310, 330** in order to form a second tool cavity **301b** for forming the holder **200.**

The third tool part **330** comprises at least one second runner **331** (in the shown examples two second runners) for injecting the second material via the second injection unit, and wherein the second tool cavity **301b** is formed in such a way that the injection marks **110** of the components in step d) are part of limiting the second tool cavity **301b,** as can be seen in **Fig. 1E****.**

A next step f) provides for forming the holder **200** by injecting the second material with the second injection unit into the second tool cavity **301b** via the second runners **331,** so that the injection marks **110** of the components **100** are over-molded with the second material, as can also be seen in **Fig. 1E****.**

In a next step g), the first and third tool parts **310, 330** are separated from each other and the built construction element **10** is ejected, as can be seen in **Fig. 1F****.**

The built construction element **10** according to this method comprises two components **100,** which are separated from each other in a predetermined distance, and a holder **200,** which holds the at least two components **100** in the predetermined distance, and wherein the injection marks **110** formed from the first material caused by separation of the first runners **321** from the components **100,** are over-molded by the second material, i.e. the holder **200,** and for an external spectator not visible on the construction element **10.**

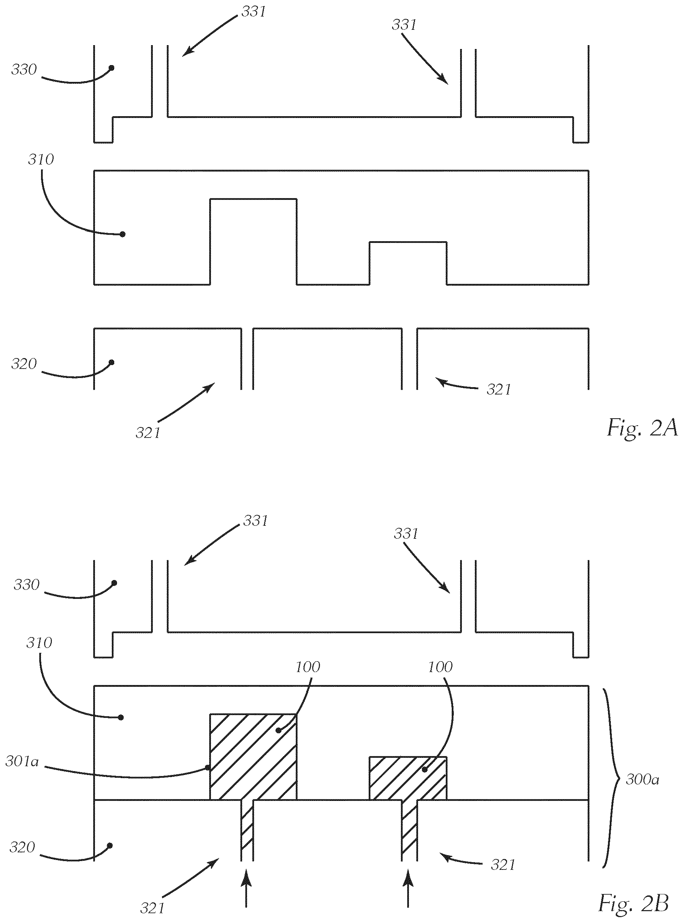

A second exemplary method is shown in **Fig. 2A** to **Fig. 2F****,** wherein the above also applies to this example.

Basically, the second example is almost identical to the aforementioned method according to **Fig. 1A** to **Fig. 1F****,** wherein a specification in the arrangement of the first, second and third tool part **310, 320, 330** is made.

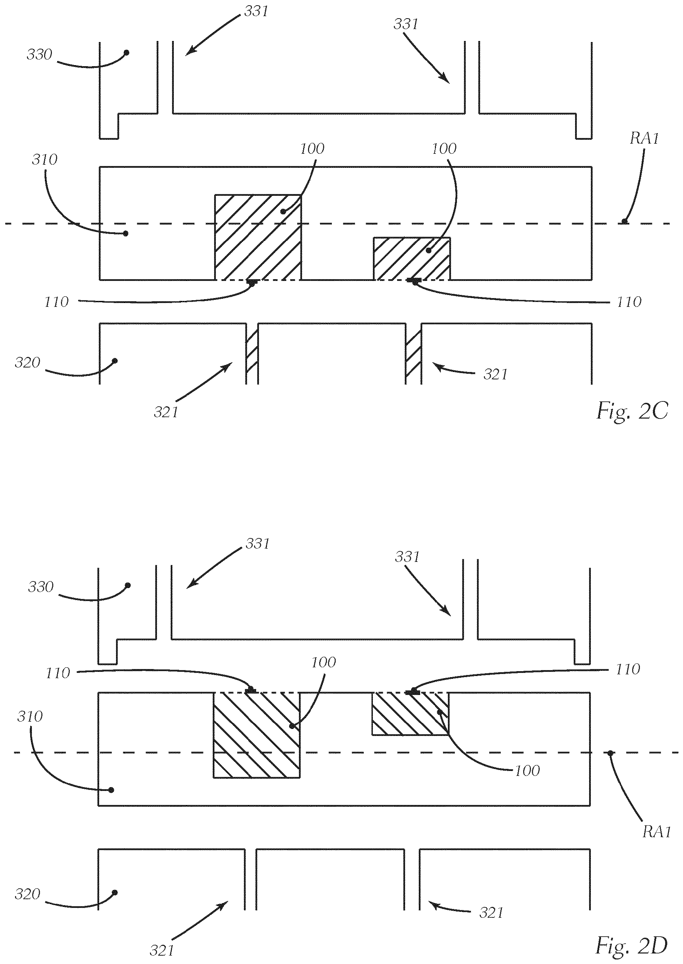

**Fig. 2A** shows providing a first, second and third tool part **310, 320, 330,** wherein the second tool part **320** is arranged on a first side of the first tool part **310** and the third tool part **330** is arranged on a side opposite of the first side of the first tool part **310.** In **Fig. 2B****,** the second tool part **320** is brought together with the first tool part **310** for building the first injection molding tool **300a** in order to form the two first tool cavities **301a** separate from each other for forming the two components **100.** Further, **Fig. 2B** shows step c) forming the two components **100** by injecting the first material with the first injection unit into the first tool cavities **301a** via the first runners **321 -** **Fig. 2C** shows step d).

In regard to steps a) to d), the aforementioned applies to this example as well, wherein in step e) the first tool part **310** is rotated around a first rotation axis **RA1** so that the built components **100,** which remain in the first tool part **310,** facing the third tool part **330** for building the second tool cavity **301b,** as can be seen in Fig. **2D****.**

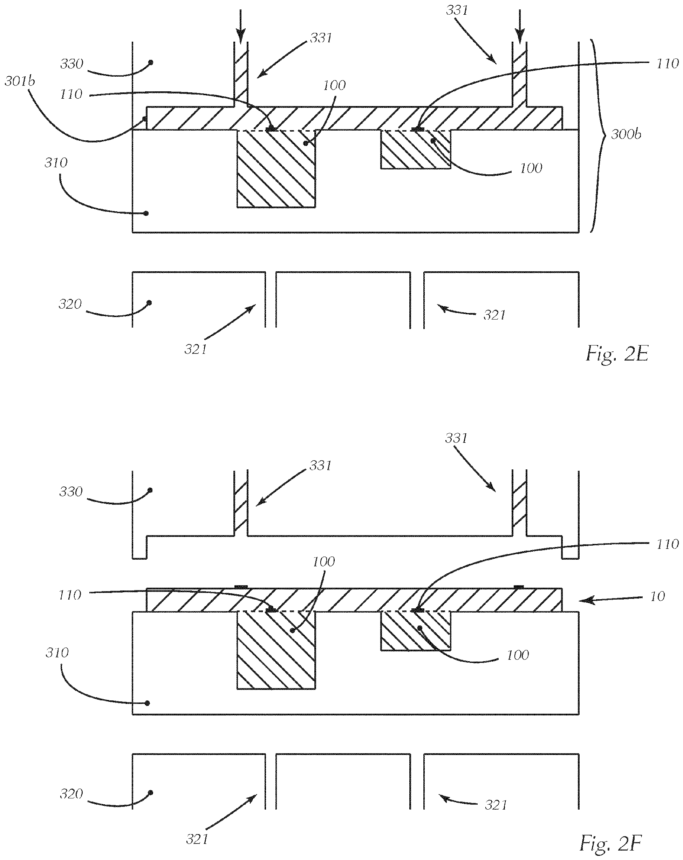

In regard to **Fig. 2E** and **Fig. 2F****,** the aforementioned regarding to **Fig. 1E** and **Fig. 1F** applies as well.

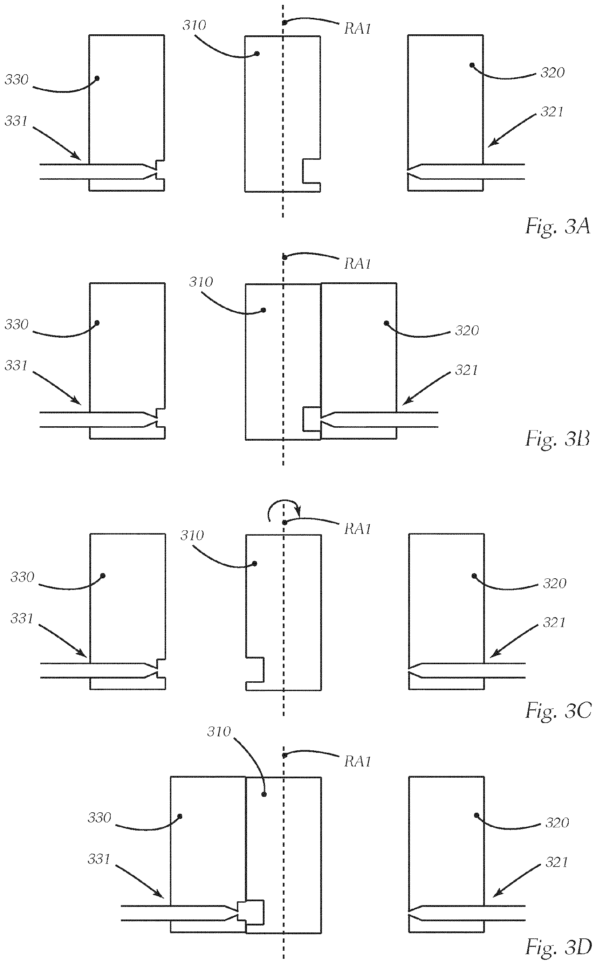

The example shown in **Fig. 3A** to **Fig. 3D** show the same principle as explained to the example according to **Fig. 2A** to **Fig. 2F****,** where the first tool part **310** is rotated around a first rotation axis **RA1.**

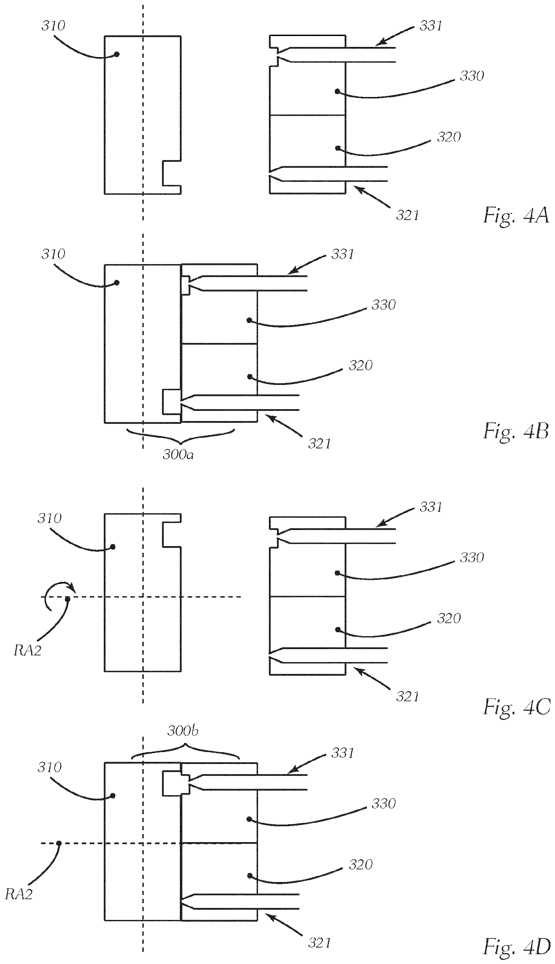

**Fig. 4A** to **Fig. 4D** show another example for a wo-material injection molding method for forming a construction element **10.**

The aforementioned in regard with **Fig. 1A** to **Fig. 3D** applies also to the example of **Fig. 4A** to **Fig. 4D****,** wherein a further specification in the arrangement of the first, second and third tool part **310, 320, 330** is made.

**Fig. 4A** shows providing a first, second and third tool part **310, 320, 330,** wherein the second tool part **320** and the third tool part **330** are arranged on the same side opposite to the first tool part **310,** wherein in step e) the first tool part **310** is rotated around a second rotation axis **RA2** so that the built components 100, which remain in the first tool part **310,** facing the third tool part **330** for building the second tool cavity **301b.**

### LIST OF REFERENCE SYMBOLS

| | |
|---|---|
| Construction element | 10 |
| Components | 100 |
| Injection marks | 110 |
| Holder | 200 |
| Injection molding tool | 300a, 300b |
| First tool cavities | 301a |
| Second tool cavity | 301b |
| First tool part | 310 |
| Second tool part | 320 |
| First runner | 321 |
| Third tool part | 330 |
| Second runner | 331 |
| First rotation axis | RA1 |
| Second rotation axis | RA2 |

## Claims

1. **A two-material injection molding method** for forming a construction element (10) for a vehicle headlamp, wherein the construction element (10) comprises:
- at least two components (100), which are separated from each other in a predetermined distance, wherein the at least two components (100) are formed with a first material,
- a holder (200), which holds the at least two components (100) in the predetermined distance, wherein the holder (200) is formed with a second material,
wherein the method comprises the following steps in chronological order:
a) providing
- a first injection unit configured to inject a first material into an injection molding tool (300a),
- a second injection unit configured to inject a second material into an injection molding tool (300b),
- a first tool part (310) and a second tool part (320), which when brought together build a first injection molding tool (300a) for building the at least two components (100), and
- a third tool part (330), which when brought together with the first tool part (310) build a second injection molding tool (300b) for building the holder (200);
b) building the first injection molding tool (300a) by bringing together the first and second tool parts (310, 320) in order to form at least two first tool cavities (301a) separate from each other for forming the at least two components (100), wherein the second tool part (320) comprises first runners (321) for injecting the first material via the first injection unit, wherein to each first tool cavity (301a) at least one first runner (321) is assigned to;
c) forming the at least two components (100) by injecting the first material with the first injection unit into the first tool cavities (301a) via the first runner (321);
d) separating the first and second tool parts (310, 320) from each other, wherein the at least two components (100) remain in the first tool part (310), wherein each component (100) comprises at least one injection mark (110) formed from the first material caused by separation of the first runners (321) from the components (100),
e) building the second injection molding tool (300b) by bringing together the first and third tool parts (310, 330) in order to form a second tool cavity (301b) for forming the holder (200), wherein the third tool part (330) comprises at least one second runner (331) for injecting the second material via the second injection unit, and wherein the second tool cavity (301b) is formed in such a way that the injection marks (110) of the components in step d) are part of limiting the second tool cavity (301b);
f) forming the holder (200) by injecting the second material with the second injection unit into the second tool cavity (301b) via the at least one second runners (331), so that the injection marks (110) of the components (100) are over-molded with the second material;
g) separating the first and third tool parts (310, 330) from each other and ejecting the built construction element (10).

2. Method according to any one of the preceding claims, **wherein** the first material is an opaque material.

3. Method according to any one of the preceding claims, **wherein** the second material is a transparent material.

4. Method according to any one of the preceding claims, **wherein** the second tool part (320) is arranged on a first side of the first tool part (310) and the third tool part (330) is arranged on a side opposite of the first side of the first tool part (310), wherein in step e) the first tool part (310) is rotated around a first rotation axis (RA1) so that the built components (100), which remain in the first tool part (310), facing the third tool part (330) for building the second tool cavity (301b).

5. Method according to any one of claims 1 to 3, **wherein** the second tool part (320) and the third tool part (330) are arranged on the same side opposite to the first tool part (310), wherein in step e) the first tool part (310) is rotated around a second rotation axis (RA2) so that the built components (100), which remain in the first tool part (310), facing the third tool part (330) for building the second tool cavity (301b).

6. Method according to any one of the preceding claims, **wherein** the first and second material is plastic.

7. **Construction element** (10) for a vehicle headlamp, wherein the construction element (10) is made according to any one of the preceding method claims, wherein the construction element (10) comprises:
- at least two components (100), which are separated from each other in a predetermined distance, wherein the at least two components (100) are formed with a first material,
- a holder (200), which holds the at least two components (100) in the predetermined distance, wherein the holder (200) is formed with a second material,
and wherein injection marks (110) formed from the first material caused by separation of the first runners (321) from the components (100), are over-molded by the second material and for an external spectator not visible on the construction element (10).

8. Construction element according to any one of the preceding claims, **wherein** the first material is an opaque material.

9. Construction element according to any one of the preceding claims, **wherein** the second material is a transparent material.
